# EUROPEAN PATENT APPLICATION

(11) **EP 4 527 622 A1**
(43) Date of publication of application: **26.03.2025**
(21) Application number: 22942236.5
(22) Date of filing: 09.06.2022
(51) Int. Cl.: B32B 37/12, B32B 37/10, B32B 37/08, B32B 38/16

(54) **HIGH-RIGIDITY MULTILAYER BASE MATERIAL-BASED LAMINATION APPARATUS AND METHOD**

(30) Priority: 18.05.2022 CN 202210542537
(71) Applicant: Sinomech Corporation, Guangzhou, Guangdong 510800 (CN)
(72) Inventor: ZUO, Guangshen, Guangzhou, Guangdong 510800 (CN); HUANG, Shunli, Guangzhou, Guangdong 510800 (CN)
(74) Representative: Haseltine Lake Kempner LLP
(86) International application number: PCT/CN2022/097917
(87) International publication number: WO 2023/221204

(57) **Abstract**

A high-rigidity multilayer substrate-based laminating apparatus and method. The laminating apparatus includes a frame (26) and sequentially arranged a first station (1), a second station (2), a third station (3), and a fourth station (4) from left to right. The upper left side of the frame (26) is equipped with a tunnel-type drying oven (5), and the upper part of the third unit (3) is equipped with a high-position unwinding unit (6). The suitable laminator model and web path will be choosen according to the substrate type and layer permutation of the high-regidity structures to be laminated, and then solvent-based or water-based adhesive is applied with gravure-coating or flexo-coating for between the surface and intermediate layers, and with solventless coating for between the intermediate and interior layers, so that the three-layer laminating accomplished inline in one pass, forming a composite product with a three-layer laminated structure with a high-rigidity substrate. The production of high-rigidity substrate-based three-layer structure using the method of this invention reduces startup frequency, shortens auxiliary, transfer, and curing times, minimizes material handling and employee work hours, shortens the production cycle, and lowers defect rate and overall production costs.

## Description

### Technical Field

The present invention relates to the field of lamination, specifically to a high-rigidity multilayer substrate-based laminating apparatus and method.

### Background Art

In the fields of flexible packaging and other composite materials, laminating structures consisting of three or more layers of high-rigidity substrates (among which the most typical are PET/AL/CPP (orPE), PET/VMPET/CPP, etc.) have long been a major component of functional packaging and new materials with high added value. The common feature of such structures is that both the surface layer and the middle layer are composed of high-rigidity substrates (such as PET (polyester film), VMPET (vacuum-metallized polyester film), or AL (aluminum foil), etc.), which exhibit outstanding barrier properties and good rigidity. This makes them an ideal choice for high-end internal contents or other functional materials, and they are therefore widely used in the packaging of high-grade foods, pharmaceuticals, protective goods, electronic products, high-temperature retort pouch, and other industries, as well as in the packaging of fertilizers, pesticides, medical equipment, and many other industries, playing an irreplaceable role.

However, precisely due to the high rigidity characteristics of these substrates, they have always been a challenge in the lamination process, and the stability of product quality often leaves much to be desired. For example, laminated products are prone to appearance defects such as white spots, and PET/VMPET substrates frequently encounter issues like aluminum transfer in batch products. Currently, the production of such structures essentially requires a two-step method, involving two separate processes, two sets of procedures, and two sets of equipment for lamination. The so-called two processes refer to dry laminating and solvent-free laminating. Dry laminating means that the substrate is first coated with a solvent-based or water-based adhesive, which is then volatilized and dried in a drying box before being laminated with another layer of substrate. Solvent-free laminating refers to using a multi-roller transfer coating mechanism to apply a solvent-free adhesive to the substrate, and the coated substrate is directly laminated with another substrate. The former process is used for laminating two layers of high-rigidity substrates due to its advantages such as high initial adhesion, while the latter process is used for laminating the inner layers because of its environmental friendliness, low harmful residue, and low cost. The two procedures are: first, completing all the steps of dry laminating, and then performing the solvent-free laminating process, with the two procedures being independent of each other. The so-called two sets of equipment refer to one set of dry laminating equipment and one set of solvent-free laminating equipment, which are essentially two independent production lines.

This independent two-step laminating process, to some extent, integrates the advantages of dry laminating and solvent-free laminating, but it has obvious disadvantages, such as the complexity of organization and management, the low efficiency,the more wasting of materials and time, the high cost, the longer manufacturing cycle, which can no longer meet the needs of development.

### Summary of the Invention

The technical problem to be solved by the present invention is to provide a high-rigidity multilayer substrate-based laminating apparatus and method, to address the technical issues present in the prior art.

To address the above technical problem, one of the technical solutions proposed by the invention is: a high-rigidity multilayer substrate-based laminating method, including the following steps:
(1) Placing the three reels of of PET, AL, and heat-sealing film (CPP or PE), on the first unwinding unit, second unwinding unit, and third unwinding unit of the laminating apparatus respectively, and unwinding them to form webs;
(2) Guiding the PET web unwound from the first unwinding unit into the first coating unit of the laminating apparatus for solvent-based or water-based adhesive coating. The coated web of PET is then guided into a channel-type drying oven for volatile drying. The heat-sealing film web unwound from the third unwinding unit is guided into the second coating unit of the laminating apparatus for solvent-free adhesive coating. The web of AL from the second unwinding unit is guided through a path from top to bottom into the first laminating of the laminating apparatus, with the web of AL directly adhering to the cylinder surface of the first laminating;
(3) Guiding the web of PET-coated from the drying oven into the first laminating of the laminating apparatus, directly adhering it to the impression roller of the first laminating, and carrying out the first lamination process with the web of to form a dual-layer laminated film of PET and AL;
(4) Guiding the dual-layer laminated film of PET and AL into the cooling cylinder of the laminating apparatus for cooling, and making the heated PET web directly contact the cooling cylinder surface;
(5) After cooling, guiding the dual-layer laminated film of PET and AL into the second laminating of the laminating apparatus, with the web of PET of the dual-layer laminated film directly pressed onto the cylinder surface of the second laminating. Simultaneously guiding the coated web of heat-sealing film from the second coating unit into the second laminating and carrying out the second lamination process with the dual-layer laminated film of PET and AL to form a three-layer laminated film of PET, AL, and heat-sealing film;
(6) Guiding the three-layer laminated film of PET, AL, and heat-sealing film into the rewinding unit of the laminating apparatus;
(7) Placing the reel of the three-layer laminated film of PET, AL, and heat-sealing film into a curing chamber at a suitable temperature for curing.

In correspondence with the above solution, the laminating apparatus used in the present invention includes a frame and four stations arranged from left to right, namely, the first station, second station, third station, and fourth station. A channel-type drying oven is arranged at the upper left side of the frame, and a high-level unwinding station is set on the upper part of the third station.

The first station has a first coating unit at its lower-middle part for solvent-based or water-based adhesive, and a first tension control unit is set at the upper-left side of the first station.

A first unwinding unit is set below the second station, and a second tension control unit is arranged above the first unwinding unit.

The lower-left side of the third station is provided with a rewinding unit, while a first laminating is arranged at the upper part of the third station, and a second laminating is set in the middle of the third station. A cooling cylinder is set between the first and second laminatings, and a third tension control unit is provided between the second laminating and the rewinding unit. A fourth tension control unit is arranged between the cooling cylinder and the second laminating.

A third unwinding unit is set at the lower-left side of the fourth station, and a second coating unit is set at the middle-right side of the third station for solventless adhesive coating. Fifth and sixth tension control units are arranged on both left and right upper sides of the fourth station respectively.

A second unwinding unit is arranged at the upper part of the high-level unwinding station, and a seventh tension control unit is set below the second unwinding unit. A first set of idle roller for unwinding webs is arranged between the first and second station on the frame, while a second set of idle roller is arranged between the third and fourth station, and an internal guide roller set is arranged within the channel-type drying oven.

To address the above technical problem, another technical solution proposed by the invention is: A laminating method based on high-rigidity multilayer substrates, comprising the following steps:
(1) Placing three reels of PET, VMPET, and heat-sealing film, on the first unwinding unit, fourth unwinding unit, and third unwinding unit of the laminating apparatus respectively, and unwinding them to form webs;
(2) Guiding the PETweb unwound from the first unwinding unit into the first coating unit of the laminating apparatus for solvent-based or water-based adhesive coating. The coated web of PET is then guided into a channel-type drying oven for volatile drying. The heat-sealing film web unwound from the third unwinding unit is guided into the second coating unit of the laminating apparatus for solvent-free adhesive coating. The web of VMPET from the fourth unwinding unit is guided into the first laminating of the laminating apparatus, with the web of VMPET directly adhering to the cylinder surface of the first laminating;
(3) Guiding the coated web of PET material strip from the drying oven into the first laminating of the laminating apparatus, directly adhering it to the impression roller of the first laminating, and carrying out the first lamination process with the web of VMPET to form a dual-layer laminated film of PET and VMPET;
(4) Guiding the dual-layer laminated film of PET and VMPET into the cooling cylinder of the laminating apparatus for cooling, and making the heated PET material directly contact the cooling cylinder surface;
(5) After cooling, guiding the dual-layer laminated film of PET and VMPET into the second laminating of the laminating apparatus, with the web of PET of the dual-layer laminated film directly pressed onto the cylinder surface of the second laminating. Simultaneously guiding the web of coated heat-sealing film from the second coating unit into the second laminating and carrying out the second lamination process with the dual-layer laminated film of PET and VMPET to form a three-layer laminated film of PET, VMPET, and heat-sealing film;
(6) Guiding the three-layer laminated film of PET, VMPET, and heat-sealing film into the rewinding unit of the laminating apparatus;
(7) Placing the reel of the three-layer laminated film of PET, VMPET, and heat-sealing film into a curing chamber at a suitable temperature for curing.

In correspondence with the above solution, the laminating apparatus used in this invention includes a frame and five stations arranged from left to right, namely, the first station, second station, third station, fourth station, and fifth station. A channel-type drying oven is arranged at the upper-left side of the frame.

The first station has a first coating unit at its lower-middle part for solvent-based or water-based adhesive, and a first tension control unit is set at the upper-left side of the first station.

A first unwinding unit is set below the second station, with a second tension control unit arranged above the first unwinding unit.

The lower-left side of the third station is provided with a rewinding unit, while a first laminating is arranged at the upper part of the third station, and a second laminating is set in the middle of the third station. A cooling cylinder is set between the first and second laminatings, and a third tension control unit is provided between the second laminating and the rewinding unit. A fourth tension control unit is arranged between the cooling cylinder and the second laminating.

A third unwinding unit is set at the lower-left side of the fourth station, and a second coating unit is set at the middle-right side of the fourth station for solvent-free adhesive coating. Fifth and sixth tension control units are arranged on both left and right upper sides of the fourth station respectively.

A fourth unwinding unit is set below the fifth station, and an eighth tension control unit is set above the fifth station.

A first set of idle rollers for unwinding webs is arranged between the first and second stations on the frame, while a second set of idle rollers is arranged between the third and fourth stations. An internal idle roller set is arranged within the channel-type drying oven, and a third set of idle rollers for unwinding webs is arranged between the third and fifth stations.

The beneficial effects of the present invention compared with the prior art are:
The suitable laminator model and web path will be choosen according to the substrate type and layer permutation of the high-regidity structures to be laminated, and then solvent-based or water-based adhesive is applied with gravure-coating or flexo-coating for between the surface and intermediate layers, and with solventless coating for between the intermediate and interior layers, so that the three-layer lamination accomplished inline in one pass, forming a three-layer laminated structure composed of high-rigidity substrates. The production of high-rigidity substrate-based three-layer structure using the method of this invention reduces the number of machine startup frequencys, shortens auxiliary time, transfer time, and curing time, decreases material turnover times, reduces man-hours, shortens the production cycle, and lowers the defective rate and overall production costs.

### Description of the Drawings

Figure 1 is the schematic diagram of the film conveying path in the laminating apparatus of Embodiment 1.
Figure 2 is the schematic diagram of the film conveying path in the laminating apparatus of Embodiment 2.
Figure 3 is the schematic diagram of the film conveying path in the laminating apparatus of Embodiment 3.
Figure 4 is the schematic diagram of the film conveying path in the laminating apparatus of Embodiment 4.

### Detailed Description

The present invention is further described in conjunction with the accompanying figures.

### Embodiment 1

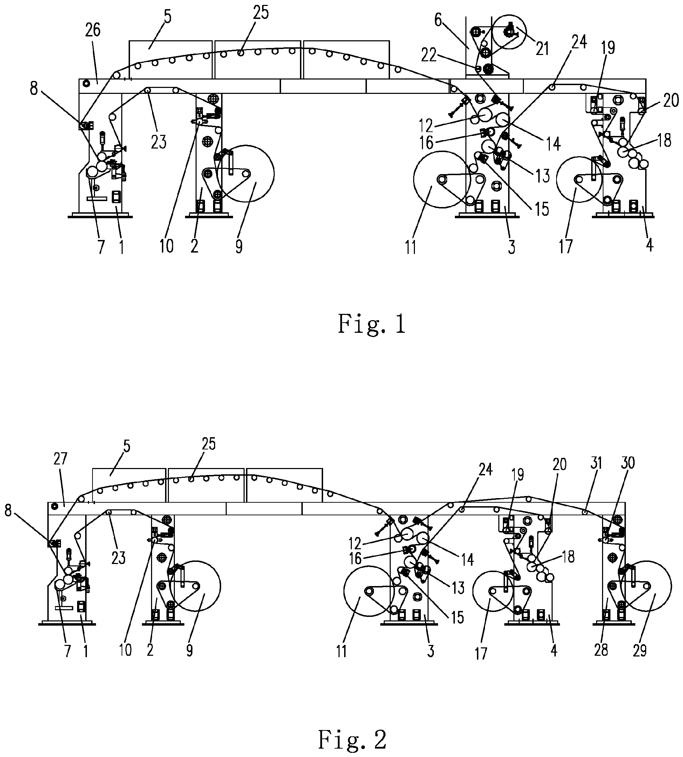

As shown in Figure 1, a laminating apparatus based on a high-rigidity multilayer substrate includes a frame 26. From left to right, the lower part of frame 26 is sequentially equipped with the first station 1, the second station 2, the third station 3, and the fourth station 4. A tunnel-type drying box 5 is arranged on the upper left side of the frame, and a high-position unwinding station 6 is arranged above the third station.

The lower middle part of the first station 1 is equipped with a first coating unit 7 for solvent-based or water-based adhesive, and a first tension control unit 8 is arranged on the upper left side of the first station.

Below the second station 2, a first unwinding unit 9 is arranged, with a second tension control unit 10 positioned above it.

On the lower left side of the third station, a winding unit 11 is set up, and the upper part of the third station 3 is equipped with a first laminating 12, with a second laminating 13 positioned in the middle of the third station 3. A cooling cylinder 14 is arranged between the first laminating 12 and the second laminating 13. A third tension control unit 15 is positioned between the second laminating 13 and the winding unit 11. Between the cooling cylinder 14 and the second laminating 13, there is a fourth tension control unit 16.

On the lower left side of the fourth station 4, a third unwinding unit 17 is positioned. A second coating unit 18 for solvent-free adhesive is positioned in the middle on the right side of the fourth station 4. The fifth tension control unit 19 and the sixth tension control unit 20 are respectively positioned on the left and right sides of the upper part of the fourth station 4.

The upper part of the high-position unwinding unit 6 is equipped with a second unwinding unit 21, and a seventh tension control unit 22 is positioned below the second unwinding unit 21.

A first guide roller group 23 for unwinding the substrate is arranged between the first station 1 and the second station 2 on the frame. A second guide roller group 24 for unwinding the substrate is arranged between the third station 3 and the fourth station 4. Inside the tunnel-type drying box 5, an internal guide roller group 25 is set up.

The operation path and control of the material belt in the laminating apparatus are as follows: The substrate belt from the first unwinding unit 9 goes through the guide roller of the second tension control unit 10, then to the first guide roller group 23 for unwinding the substrate, and finally to the pressure roller of the first coating unit 7, forming the first substrate path. The tension of this segment of the material belt path is controlled by the second tension control unit 10. The substrate belt from the first unwinding unit 9 goes from the pressure roller of the coating unit 7 to the guide roller of the first tension control unit 8, then to the internal guide roller group 25 in the drying box, and finally to the first laminating 12, forming the second substrate path. The tension of this segment is controlled by the first tension control unit 8. The substrate belt from the second unwinding unit 21 goes through the guide roller of the seventh tension control unit 22, then to the first laminating 12, forming the third substrate path. The tension of this segment is controlled by the seventh tension control unit 22. The substrate belt from the third unwinding unit 17 goes through the guide roller of the fifth tension control unit 19, then to the second coating unit 18, forming the fourth substrate path. The tension of this segment is controlled by the fifth tension control unit 19. The substrate belt from the third unwinding unit 17 goes from the second coating unit 18 to the guide roller of the sixth tension control unit 20, then to the second guide roller group 24 for the substrate, and finally to the second laminating 13, forming the fifth substrate path. The tension of this segment is controlled by the sixth tension control unit 20. The material belt goes from the first laminating 12 through the cooling cylinder 14, then to the fourth tension control unit 16, and finally to the second laminating 13, forming the sixth substrate path. The tension of this segment is controlled by the fourth tension control unit 16. The material belt goes from the second laminating 13 through the guide roller of the third tension control unit 15, then to the winding unit 11, forming the seventh substrate path. The tension of this segment is controlled by the third tension control unit 15.

This type of laminating apparatus is suitable for producing high-rigidity laminated structures like PET/AL/CPP (or PE). The lamination process flow is as follows:
1) The three types of substrate rolls, PET, AL, and CPP (or PE), are placed on the first unwinding unit 9, the second unwinding unit 21, and the third unwinding unit 17 of the laminating apparatus for unwinding and material belt guiding.
2) The PET substrate belt unwound from the first unwinding unit 9 is fed into the first coating unit 7 of the laminating apparatus for solvent-based or water-based adhesive coating. The coated PET substrate belt is fed into and dried by the tunnel-type drying box 5. The CPP (or PE) substrate belt unwound from the third unwinding unit 17 is fed into the second coating unit 18 of the fourth station 4 for solvent-free adhesive coating. The aluminum foil (AL) substrate belt from the second unwinding unit 21 is guided through the shortest path into the first laminating 12 of the third station 3, and the AL substrate belt is directly attached to the cylinder surface in the first laminating 12.
3) The PET substrate belt coated with adhesive and guided out of the drying box 5 is fed into the first laminating 12 of the laminating apparatus and directly attached to the impression roller in the first laminating 12 to be laminated with the AL substrate belt, forming a two-layer laminated film of PET and AL.
4) The two-layer laminated film of PET and AL is fed into the cooling cylinder 14 of the third station 3 for cooling, making the heated PET substrate come into direct contact with the surface of the cooling cylinder.
5) After cooling, the two-layer laminated film of PET and AL is fed into the second laminating 13. The PET layer of the two-layer laminated film directly presses onto the cylinder r surface of the second laminating 13. Simultaneously, the CPP (or PE) substrate belt coated by the second coating unit 18 is also fed into the second laminating 13 to be laminated with the PET and AL two-layer laminated film, forming a three-layer laminated film of PET, AL, and CPP (or PE).
6) The three-layer laminated film of PET, AL, and CPP (or PE) is fed into the winding unit 11 of the laminating apparatus, thus completing the entire process of one unwinding, one material guiding, and one winding to achieve a three-layer lamination on the machine.
7) The three-layer laminated film of PET, AL, and CPP (or PE) is placed in a curing room with a suitable temperature for curing, completing the entire dry and solvent-free lamination process flow.

During production, the high-rigidity substrates of the outer and middle layers adopt dry lamination processes, while the middle and inner layers use solvent-free lamination processes. This type of laminated packaging material meets both the appearance and functional requirements of the outer layer and the environmental and safety requirements of the inner layer. Production efficiency is significantly improved. The unwinding positions of this model ensure that the middle layer AL substrate belt can reach the laminating in the shortest distance and guarantee the correct arrangement of the three substrates in the laminated structure. During the lamination process, the first and second composites of the laminated film press different substrates onto the surface of the steel roller, improving the lamination quality. The reasonable arrangement of the cooling cylinder ensures that the higher temperature layer of the substrate is directly pressed onto the surface of the cooling cylinder, improving the cooling effect.

### Embodiment 2

As shown in Figure 2, a high-rigidity multilayer substrate laminating apparatus includes a frame 27. From left to right, arranged sequentially below the frame 27 are the first station 1, the second station 2, the third station 3, the fourth station 4, and the fifth station 28. On the upper left side of the frame, there is a passage-type drying box 5.

The lower middle part of the first station 1 is equipped with a first coating unit 7 for solvent-based or water-based adhesive, and the upper left side of the first station 1 is equipped with a first tension control unit 8.

Below the second station 2, there is a first unwinding unit 9, and above the first unwinding unit 9 is a second tension control unit 10.

On the lower left side of the third station 3, there is a winding unit 11. The upper part of the third station 3 is equipped with a first laminating 12, and the middle part of the third station 3 is equipped with a second laminating 13. A cooling cylinder 14 is arranged between the first laminating 12 and the second laminating 13. A third tension control unit 15 is arranged between the second laminating 13 and the winding unit 11, and a fourth tension control unit 16 is arranged between the cooling cylinder 14 and the second laminating 13.

The lower left side of the fourth station 4 is equipped with a third unwinding unit 17. The middle right side of the fourth station 4 is equipped with a second coating unit 18 for solvent-free adhesive, and the upper part of the fourth station 4 is equipped with a fifth tension control unit 19 and a sixth tension control unit 20, respectively, on the left and right sides.

The lower part of the fifth station 5 is equipped with a fourth unwinding unit 29, and the upper part of the fifth station 5 is equipped with an eighth tension control unit 30.

On the frame, between the first station 1 and the second station 2, there is a first guiding roller set 23 for the unwinding substrate. Between the third station 3 and the fourth station 4, there is a second guiding roller set 24 for the unwinding substrate. Inside the passage-type drying box 5, there is an internal guiding roller set 25. Between the third station 3 and the fifth station 5, there is a third guiding roller set 31 for the unwinding substrate.

The material tape running path and control of the laminating apparatus are as follows: the substrate tape from the first unwinding unit 9 is guided through the rollers of the second tension control unit 10 to the first guiding roller set 23 for the unwinding substrate to form the first substrate tape path, and the tape tension of this path is controlled by the second tension control unit 10. The substrate tape from the first unwinding unit 9 is guided from the pressure roller of the coating unit 7 to the rollers of the first tension control unit 8, through the internal guiding roller set 25 to the first laminating 12 to form the second substrate tape path, and the tension of this path is controlled by the first tension control unit 8. The substrate tape from the fourth unwinding unit 29 is guided through the rollers of the eighth tension control unit 30 to the third guiding roller set 31 for the unwinding substrate to form the eighth substrate tape path, and the tension of this path is controlled by the eighth tension control unit 30. The substrate tape from the third unwinding unit 17 is guided through the rollers of the fifth tension control unit 19 to the second coating unit 18 to form the fourth substrate tape path, and the tension of this path is controlled by the fifth tension control unit 19. The substrate tape from the third unwinding unit 17 is guided from the second coating unit 18 to the rollers of the sixth tension control unit 20, through the second guiding roller set 24 for the unwinding substrate to the second laminating 13 to form the fifth substrate tape path, and the tension of this path is controlled by the sixth tension control unit 20. The material tape is guided from the first laminating 12 through the cooling cylinder 14 to the fourth tension control unit 16, and then to the second laminating 13 to form the sixth substrate tape path, with the tension of this path controlled by the fourth tension control unit 16. The material tape is guided from the second laminating 13 through the rollers of the third tension control unit 15 to the winding unit 11, forming the seventh substrate tape path, with the tension of this path controlled by the third tension control unit 15.

The laminating apparatus is suitable for producing high-rigidity laminated structures like PET/VMPET/CPP (or PE). The lamination process is as follows:
1) Place the rolls of PET, VMPET, and CPP (or PE) on the first unwinding unit 9, the fourth unwinding unit 29, and the third unwinding unit 17 of the laminating apparatus, respectively, to unwind the material tapes.
2) Guide the PET substrate tape unwound by the first unwinding unit 9 to the first coating unit 7 of the laminating apparatus for solvent-based or water-based adhesive coating. The coated PET substrate tape is then guided through the passage-type drying box 5 for volatile drying. Guide the CPP (or PE) substrate tape unwound by the third unwinding unit 17 to the second coating unit 18 of the fourth station 4 for solvent-free adhesive coating. Guide the VMPET substrate tape from the fourth unwinding unit 29 to the first laminating 12 of the third station 3, and the VMPET substrate tape is directly adhered to the cylinder surface of the first laminating 12.
3) Guide the PET coated substrate tape from the drying box 5 to the first laminating 12 of the laminating apparatus. The PET coated substrate tape is directly adhered to the impression roller of the first laminating 12, and combined with the VMPET substrate tape (i.e., the first lamination step) to form a PET/VMPET double-layer laminated film.
4) Guide the PET and VMPET double-layer laminated film material tape to the cooling cylinder 14 of the third station 3 for cooling, allowing the heated PET substrate to come into direct contact with the surface of the cooling cylinder.
5) After cooling, guide the PET and VMPET double-layer laminated film material tape to the second laminating 13. The PET layer of the double-layer laminated film material tape is directly pressed onto the cylinder surface of the second laminating 13. Simultaneously, guide the adhesive-coated CPP (or PE) substrate tape from the second coating unit 18 to the second laminating 13 to undergo the second lamination step with the PET and VMPET double-layer laminated film material tape, forming a three-layer laminated film of PET, VMPET, and CPP (or PE).
6) Guide the three-layer laminated film of PET, VMPET, and CPP (or PE) to the winding unit 11 of the laminating apparatus to complete one cycle of unwinding, material feeding, and winding, achieving the entire three-layer lamination process.
7) Place the three-layer laminated film roll of PET, VMPET, and CPP (or PE) into a curing chamber at a suitable temperature for curing, completing the entire process of both dry and solvent-free lamination processes.

During production, the high-rigidity substrates of the outer and middle layers adopt the dry lamination process, while the lamination of the middle layer and the inner layer adopts the solvent-free lamination process. This type of laminated packaging material not only meets the appearance and functional requirements of the outer layer but also meets the environmental protection and hygiene safety requirements of the inner layer, significantly improving production efficiency. The unwinding position of this model ensures the correct arrangement of the three-layer substrate in the laminated structure. During the lamination process, the first and second composites of the laminated film press different substrates onto the steel roller surface, improving the lamination quality. The reasonable setting of the cooling cylinder ensures that the substrate with a higher temperature directly presses onto the cooling cylinder surface, improving the cooling effect.

### Embodiment 3

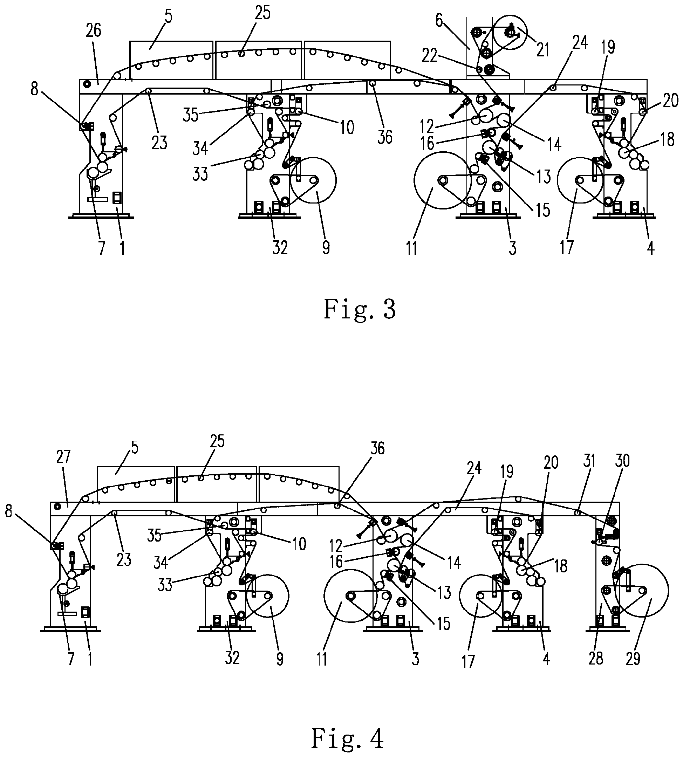

As shown in Figure 3, different from Embodiment 1, the second station 32 has a third coating unit 33 for solvent-free adhesive in the middle of its left side, and the first unwinding unit 9 is located at the lower right part of the second station 32. On the upper part of the second station 32, the ninth tension control unit 34 and the second tension control unit 10 are respectively arranged on the left and right sides. A first substrate path conversion guide roller 35 is arranged between the ninth tension control unit 34 and the second tension control unit 10 at the upper part of the second station 32. A fourth unwinding substrate path guide roller group 36 is set between the second station 32 and the third station 4 on the machine frame.

The expanded laminating apparatus based on the laminating apparatus in Embodiment 1 has the advantage of performing a three-layer structure lamination process of dry composite combined with solvent-free composite or an all-solvent-free lamination process of a three-layer structure. When performing the three-layer structure lamination with dry composite and solvent-free lamination processes proposed by the present invention, the second station 32 acts as the first unwinding unit. At this time, the first unwinding unit's substrate material passes through the second tension control unit 10, the path conversion guide roller 35, the first unwinding substrate path guide roller group 23, and the first coating unit 7, forming the eighth substrate material path. In the all-solvent-free process for the three-layer laminated structure, the second station functions as both the first unwinding unit and the third coating unit. At this time, the first coating unit 7 and the drying oven 5 for solvent-based or water-based adhesive are not in operation. The substrate material of the first unwinding unit passes through the second tension control unit 10 and the third coating unit 33 to form the ninth substrate material path. The substrate material of the first unwinding unit passes through the third coating unit 33, the ninth tension control unit 34, the fourth unwinding substrate path guide roller group 36, and enters the first laminating 12 to form the tenth substrate material path.

### Embodiment 4

As shown in Figure 4, different from Embodiment 2, the second station 32 has a third coating unit 33 for solvent-free adhesive in the middle of its left side, and the first unwinding unit 9 is located at the lower right part of the second station 32. On the upper part of the second station 32, the ninth tension control unit 34 and the second tension control unit 10 are respectively arranged on the left and right sides. A first substrate path conversion guide roller 35 is arranged between the ninth tension control unit 34 and the second tension control unit 10 at the upper part of the second station 32. A fourth unwinding substrate path guide roller group 36 is set between the second station 32 and the third station 4 on the machine frame.

The expanded laminating apparatus based on the laminating apparatus in Embodiment 2 has the advantage of performing a three-layer structure lamination process of dry composite combined with solvent-free composite or an all-solvent-free lamination process of a three-layer structure. When performing the three-layer structure lamination with dry composite and solvent-free lamination processes proposed by the present invention, the second station 32 acts as the first unwinding unit. At this time, the first unwinding unit's substrate material passes through the second tension control unit 10, the path conversion guide roller 35, the first unwinding substrate path guide roller group 23, and the first coating unit 7, forming the eighth substrate material path. In the all-solvent-free process for the three-layer laminated structure, the second station functions as both the first unwinding unit and the third coating unit. At this time, the first coating unit 7 and the drying oven 5 for solvent-based or water-based adhesive are not in operation. The substrate material of the first unwinding unit passes through the second tension control unit 10 and the third coating unit 33 to form the ninth substrate material path. The substrate material of the first unwinding unit passes through the third coating unit 33, the ninth tension control unit 34, the fourth unwinding substrate path guide roller group 36, and enters the first laminating 12 to form the tenth substrate material path.

Since the two lamination processes are interconnected, the working temperature of each unit must be coordinated. The process control point temperatures for Embodiments 1 to 4 are set as shown in the table below:

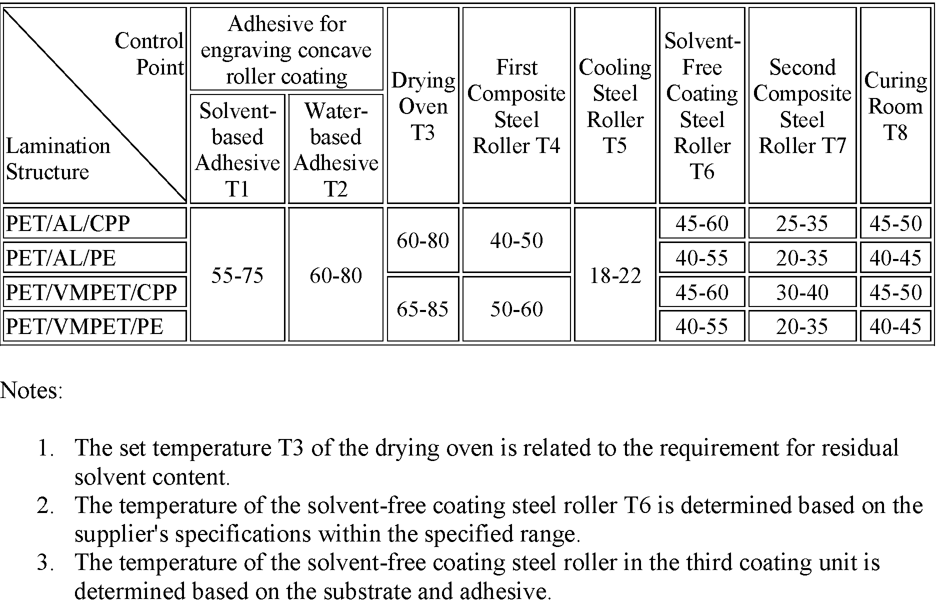

This invention describes the process and laminated structures of two typical common laminated structures. Many similar laminated structures can also be compounded using the same process and equipment.

Applying conventional dual-station technology and methods to the first unwinding unit, second unwinding unit, and rewinding unit in the present invention is also within the scope of protection of the present invention.

## Claims

1. A high-rigidity multilayer substrate-based laminating method, **characterized in that** it comprises the following steps:
(1) Placing the three reels of PET, AL, and heat-sealing film, on the first unwinding unit, second unwinding unit, and third unwinding unit of the laminating apparatus respectively, and unwinding them to form webs;
(2) Guiding the PET web unwound from the first unwinding unit into the first coating unit of the laminating apparatus for solvent-based or water-based adhesive coating; the coated web of PET is then guided into a channel-type drying oven for volatile drying; the heat-sealing film web unwound from the third unwinding unit is guided into the second coating unit of the laminating apparatus for solvent-free adhesive coating; the web of AL from the second unwinding unit is guided through a path from top to bottom into the first laminating of the laminating apparatus, with the web of AL directly adhering to the cylinder surface of the first laminating;
(3) Guiding coated web of PET from the drying oven into the first laminating of the laminating apparatus, directly adhering it to the impression roller of the first laminating, and carrying out the first lamination process with the web of AL to form a dual-layer laminated film of PET and AL;
(4) Guiding the dual-layer laminated film of PET and AL into the cooling cylinder of the laminating apparatus for cooling, and making the heated PET web directly contact the cooling cylinder surface;
(5) After cooling, guiding the dual-layer laminated film of PET and AL into the second laminating of the laminating apparatus, with the web of PET of the dual-layer laminated film directly pressed onto the cylinder surface of the second laminating; simultaneously guiding the coated web of heat-sealing film from the second coating unit into the second laminating and carrying out the second lamination process with the dual-layer laminated film of PET and AL to form a three-layer laminated film of PET, AL, and heat-sealing film;
(6) Guiding the three-layer laminated film of PET, AL, and heat-sealing film into the rewinding unit of the laminating apparatus;
(7) Placing the reel of the three-layer laminated film of PET, AL, and heat-sealing film into a curing chamber at a suitable temperature for curing.

2. A high-rigidity multilayer substrate-based laminating method, **characterized in that** it comprises the following steps:
(1) Placing three reels of PET, VMPET, and heat-sealing film, on the first unwinding unit, fourth unwinding unit, and third unwinding unit of the laminating apparatus respectively, and unwinding them to form webs;
(2) Guiding the PET web unwound from the first unwinding unit into the first coating unit of the laminating apparatus for solvent-based or water-based adhesive coating; the coated web of PET is then guided into a channel-type drying oven for volatile drying; the heat-sealing film web unwound from the third unwinding unit is guided into the second coating unit of the laminating apparatus for solvent-free adhesive coating; the web of VMPET from the fourth unwinding unit is guided into the first laminating of the laminating apparatus, with the web of VMPET directly adhering to the cylinder surface of the first laminating;
(3) Guiding the coated web of PET from the drying oven into the first laminating of the laminating apparatus, directly adhering it to the impression roller of the first laminating, and carrying out the first lamination process with the web of VMPET to form a dual-layer laminated film of PET and VMPET;
(4) Guiding the dual-layer laminated film of PET and VMPET into the cooling cylinder of the laminating apparatus for cooling, and making the heated web of P ET directly contact the cooling cylinder surface;
(5) After cooling, guiding the dual-layer laminated film of PET and VMPET into the second laminating of the laminating apparatus, with the web of PET of the dual-layer laminated film directly pressed onto the cylinder surface of the second laminating; simultaneously guiding the web of coated heat-sealing film from the second coating unit into the second laminating and carrying out the second lamination process with the dual-layer laminated film of PET and VMPET to form a three-layer laminated film of PET, VMPET, and heat-sealing film;
(6) Guiding the three-layer laminated film of PET, VMPET, and heat-sealing film into the rewinding unit of the laminating apparatus;
(7) Placing the reel of the three-layer laminated film of PET, VMPET, and heat-sealing film into a curing chamber at a suitable temperature for curing.

3. The high-rigidity multilayer substrate-based laminating method as claimed in claims 1 or 2, **characterized in that** the heat-sealing film is CPP or PE.

4. The high-rigidity multilayer substrate-based laminating method as claimed in claim 1, **characterized in that** the working temperature of solvent-based adhesive for the gravure coating is 55-75°C, and for the gravure coating with water-based adhesive , the working temperature is 60-80°C; the working temperature of the drying oven is 60-80°C; the surface temperature of the cylinder that used in first laminating is 40-50°C, and the surface temperature of the cooling cylinder is 18-22°C; the surface temperature of the solventless coating cylinders for CPP substrate is 45-60°C, and for the PE substrate, it is 40-55°C; the surface temperature of cylinder that used in the second laminating for the CPP substrate is 25-35°C, and for the PE substrate, it is 20-35°C; the temperature of the curing room for the CPP substrate is 45-50°C, and for the PE substrate, it is 40-45°C.

5. The high-rigidity multilayer substrate-based laminating method as claimed in claim 2, **characterized in that** the working temperature of the solvent-based adhesive for the gravure coating is 55-75°C, and for the gravure coating with the water-based adhesive, the working temperature is 60-80°C; the working temperature of the drying oven is 65-85°C; the surface temperature of cylinder that used in first laminating is 50-60°C, and the surface temperature of the cooling cylinder is 18-22°C; the surface temperature of the solventless coating cylinders for CPP substrate is 45-60°C, and for the PE substrate, it is 40-55°C; the surface temperature of the cylinder that used in the second laminating for the CPP substrate is 30-40°C, and for the PE substrate, it is 20-35°C; the temperature of the curing room for the CPP substrate is 45-50°C, and for the PE substrate, it is 40-45°C.

6. A high-rigidity multilayer substrate-based laminating apparatus, **characterized in that** it includes a frame and four stations arranged from left to right, namely, the first station, second station, third station, and fourth station; a channel-type drying oven is arranged at the upper left side of the frame, and a high-level unwinding station is set on the upper part of the third station;
the first station has a first coating unit at its lower-middle part for solvent-based or water-based adhesive, and a first tension control unit is set at the upper-left side of the first station;
a first unwinding unit is set below the second station, and a second tension control unit is arranged above the first unwinding unit;
the lower-left side of the third station is provided with a rewinding unit, while a first laminating is arranged at the upper part of the third station, and a second laminating is set in the middle of the third station; a cooling cylinder is set between the first and second laminatings, and a third tension control unit is provided between the second laminating and the rewinding unit; a fourth tension control unit is arranged between the cooling roller and the second laminating;
a third unwinding unit is set at the lower-left side of the fourth station, and a second coating unit is set at the middle-right side of the third station for solventless coating; fifth and sixth tension control units are arranged on both left and right upper sides of the fourth station respectively;
a second unwinding unit is arranged at the upper part of the high-level unwinding station, and a seventh tension control unit is set below the second unwinding unit;
a first set of idle roller for unwinding webs is arranged between the first and second stations on the frame, while a second set of idle roller is arranged between the third and fourth station, and an internal guide roller set is arranged within the channel-type drying oven.

7. The high-rigidity multilayer substrate-based laminating apparatus as claimed in claim 6, **characterized in that** the left-side middle of the second station is equipped with a third coating unit for solvent-free adhesive, the lower right part of the second station is equipped with a first unwinding unit, and the upper left and right sides of the second station are respectively equipped with a ninth tension control unit and a second tension control unit; a first web path-converting guide roller is set between the ninth tension control unit and the second tension control unit; a fourth set of idle roller for unwinding web is set between the second station and the fourth station.

8. A high-rigidity multilayer substrate-based laminating apparatus, **characterized in that** it includes a frame and five stations arranged from left to right, namely, the first station, second station, third station, fourth station, and fifth station; a channel-type drying oven is arranged at the upper-left side of the frame;
the first station has a first coating unit at its lower-middle part for solvent-based or water-based adhesive, and a first tension control unit is set at the upper-left side of the first station;
a first unwinding unit is set below the second station, with a second tension control unit arranged above the first unwinding unit;
the lower-left side of the third station is provided with a rewinding unit, while a first laminating is arranged at the upper part of the third station, and a second laminating is set in the middle of the third station; a cooling cylinder is set between the first and second laminatings, and a third tension control unit is provided between the second laminating and the rewinding unit; a fourth tension control unit is arranged between the cooling cylinder and the second laminating;
a third unwinding unit is set at the lower-left side of the fourth station, and a second coating unit is set at the middle-right side of the fourth station for solvent-free adhesive coating; fifth and sixth tension control units are arranged on both left and right upper sides of the fourth fourth station respectively;
a fourth unwinding unit is set below the fifth station, and an eighth tension control unit is set above the fifth station;
a first set of idle rollers for unwinding webs is arranged between the first and second stations on the frame, while a second set of idle rollers is arranged between the third and fourth stations; a set of internal idle roller is arranged within the channel-type drying oven, and a third set of idle rollers for unwinding webs is arranged between the third and fifth stations.

9. The high-rigidity multilayer substrate-based laminating apparatus as claimed in claim 8, **characterized in that** the left-side middle of the second station is equipped with a third coating unit for solvent-free adhesive coating, the lower right part of the second station is equipped with a first unwinding unit, and the upper left and right sides of the second station are respectively equipped with a ninth tension control unit and a second tension control unit; a first web path-converting idle roller is set between the ninth tension control unit and the second tension control unit at the upper part of the second station; a fourth unwinding web path is set on the machine frame between the second station and the fourth station.
